# EUROPEAN PATENT APPLICATION

(11) **EP 4 826 101 A1**
(43) Date of publication of application: **21.10.2026**
(21) Application number: 24904311.8
(22) Date of filing: 16.12.2024
(51) Int. Cl.: C22C 38/58, C22C 38/42, C22C 38/48, C22C 38/50, C22C 38/06, C22C 38/00, C21D 8/02, C21D 1/26, C21D 9/46, C23C 2/06

(54) **PLATED STEEL SHEET AND MANUFACTURING METHOD THEREFOR**

(30) Priority: 15.12.2023 KR 20230182812
(71) Applicant: POSCO Co., Ltd, Gyeongsangbuk-do 37859 (KR)
(72) Inventor: SO, Seul-Gi, Pohang-si, Gyeongsangbuk-do 37877 (KR); YOO, Bong-Hwan, Gwangyang-si, Jeollanam-do 57807 (KR); KIM, Sung-Joo, Pohang-si, Gyeongsangbuk-do 37877 (KR); KANG, Choon-Ho, Pohang-si, Gyeongsangbuk-do 37877 (KR); PARK, Hyoung-Jin, Seoul Seoul 06194 (KR)
(74) Representative: Meissner Bolte Partnerschaft mbB
(86) International application number: PCT/KR2024/020382
(87) International publication number: WO 2025/127746

(57) **Abstract**

The present invention relates to a plated steel sheet and a manufacturing method therefor, the plated steel sheet comprising: a base steel sheet comprising, by weight%, 0.03-0.1% of C, 1.5% or less of Si, 0.3-2.7% of Mn, 0.5-1.5% of Cr, 0.2-1.0% of Cu, 0.05-0.1% of Ni, 0.1% or less of Al, 0.1% or less of Nb, 0.1% or less of Ti, 0.03% or less of P, 0.02% or less of S, and 0.015% or less of N, with the remainder being Fe and other inevitable impurities; and a plating layer formed on at least one surface of the base steel sheet, wherein the area of non-plated regions is 0.1% or less by area%, and the difference in tensile strength before and after a corrosion test is 10% or less. More specifically, the present invention relates to a plated steel sheet having excellent corrosion resistance and durability, and a manufacturing method therefor.

## Description

### Technical Field

The present disclosure relates to a plated steel sheet and a manufacturing method therefor, and more particularly, to a plated steel sheet having excellent corrosion resistance and durability, and a manufacturing method therefor.

### Background Art

Zinc-based plated steel sheets have sacrificial corrosion properties, in which zinc, having a lower redox potential than iron, is corroded first, when exposed to a corrosive environment, thereby suppressing corrosion of a steel material. In addition, as zinc in a plating layer may be oxidized to form a dense corrosion product on a surface of the steel material, thereby blocking the steel material from an oxidizing atmosphere to improve corrosion resistance of the steel material. Due to the advantageous properties, a range of application of the zinc-based plated steel sheets may be recently expanded to construction materials, home appliances, and automobile steel sheets.

However, the corrosive environment may be gradually deteriorating due to an increase in air pollution caused by industrial advancement, and due to strict regulations on resource and energy conservation, the need to develop steel materials with better corrosion resistance than conventional galvanized steel materials is increasing.

To improve such problems, various studies are being conducted into manufacturing technology of zinc alloy-based plated steel sheets for improving corrosion resistance of steel materials by adding an element such as aluminum (Al), magnesium (Mg), and the like to a zinc plating bath. A representative example may be a Zn-Mg-Al-based zinc alloy plated steel sheet in which Mg is additionally added to a Zn-Al plating composition system.

However, the Zn-Mg-Al zinc alloy plated steel sheets may be often processed and used, and during shear and bending processing, a base steel sheet may be exposed in cross-sections, plating layer cracks, processing damage portions, or the like that naturally occur, reducing corrosion resistance, and speeding up spread of corrosion, making it difficult to maintain durability of the steel sheet.

In a general zinc alloy plated steel sheet, when exposed to a corrosive environment, Zn hydroxide (Zn(OH₂)) may be mainly generated on a surface thereof. On the other hand, in the case of a Zn-Al-Mg-based zinc alloy plated steel sheet, Mg-Al-based layered double hydroxide (LDH) (Mg₆Al₂(OH)₁₆CO₃), which may be a very dense corrosion product, may be formed by the influence of Mg and Al in a plating surface layer. Such a corrosion product may flow down and cover an exposed portion of a base steel sheet, to help maintain initial corrosion resistance.

However, when an unevenly formed portion of the corrosion product and the base steel sheet are thick, the exposed portion may not be sufficiently covered, resulting in a partial corrosion potential difference and corrosion-vulnerable point. Due to such uneven corrosion propagation, durability may be deteriorated. In particular, when used as a structural steel material, it may be more important to maintain durability of the steel material, so improvement of quality may be required.

### Disclosure of Invention

### Technical Problem

An embodiment of the present disclosure is to provide a plated steel sheet and a manufacturing method therefor.

An embodiment of the present disclosure is to provide a plated steel sheet having excellent corrosion resistance and durability, and a manufacturing method therefor.

An object of the present disclosure is not limited to the descriptions. One of ordinary skill in the art will have no difficulty in understanding the additional object of the present disclosure from the overall content of the present specification.

### Solution to Problem

An embodiment of the present disclosure relates to a plated steel sheet comprising a base steel sheet comprising, by weight, 0.03-0.1% of C, 1.5% or less of Si, 0.3-2.7% of Mn, 0.5-1.5% of Cr, 0.2-1.0% of Cu, 0.05-0.1% of Ni, 0.1% or less of Al, 0.1% or less of Nb, 0.1% or less of Ti, 0.03% or less of P, 0.02% or less of S, and 0.015% or less of N, with a remainder of Fe and inevitable impurities; and
a plating layer formed on at least one surface of the base steel sheet,
wherein an area of non-plated regions is 0.1% or less, by area, and
wherein a difference in tensile strength before and after a corrosion test is 10% or less.

An oxide comprising at least one of Cr, Cu, Ni, Nb, or Ti may be 10% or less of the base steel sheet, by area, within a region of 50 nm from a surface of the base steel sheet.

The plating layer may be a Zn-based plating layer comprising 4-7% of Mg and 8.2-20% of Al, by weight.

The plating layer may further comprise one or more selected from the group comprising of (a) to (h):
(a) at least one of 0.5% or less of Si or 0.5% or less of Ni;
(b) at least one of 1.0% or less of Ca, 0.1% or less of La, 0.1% or less of Ce, 0.1% or less of Y, or 1.0% or less of Sr;
(c) 0.1% or less of Ti;
(d) 0.5% or less of W;
(e) 2.0% or less of Cu;
(f) at least one of 1.0% or less of Fe, 0.5% or less of Cr, 0.5% or less of Mn, or 0.5% or less of V;
(g) at least one of 0.1% or less of B or 0.1% or less of P; and
(h) at least one of 1.0% or less of Sn, 1.0% or less of Sb, or 1.0% or less of Bi.

The plating layer may comprise at least one of a Zn-Al-MgZn₂ ternary eutectic structure, a Zn-MgZn₂ binary eutectic structure, an Al single-phase structure in which Zn is solid-dissolved, or a Zn single-phase structure.

An embodiment of the present disclosure relates to a method for manufacturing a plated steel sheet, including preparing a base steel sheet including, by weight, 0.03-0.1% of C, 1.5% or less of Si, 0.3-2.7% of Mn, 0.5-1.5% of Cr, 0.2-1.0% of Cu, 0.05-0.1% of Ni, 0.1% or less of Al, 0.1% or less of Nb, 0.1% or less of Ti, 0.03% or less of P, 0.02% or less of S, and 0.015% or less of N, with a remainder of Fe and inevitable impurities;
annealing the base steel sheet;
pretreating the annealed base steel sheet; and
plating the pretreated base steel sheet,
wherein, in the pretreating, an R value defined in Relationship 1 is 4 or more, and the number of passes is 3 or more:

   [Relationship 1] $R = \left({Bt}^{2}\right) \times \left(Bn/2\right)$
   (In the Relationship, Bt is a thickness of a brush bristle (mm) and Bn is the number of brush bristles (EA))

In the plating, a plating bath may be a Zn-based plating bath comprising 4-7% of Mg and 8.2-20% of Al, by weight.

The plating layer may further comprise one or more selected from the group comprising of (a) to (h):
(a) at least one of 0.5% or less of Si or 0.5% or less of Ni;
(b) at least one of 1.0% or less of Ca, 0.1% or less of La, 0.1% or less of Ce, 0.1% or less of Y, or 1.0% or less of Sr;
(c) 0.1% or less of Ti;
(d) 0.5% or less of W;
(e) 2.0% or less of Cu;
(f) at least one of 1.0% or less of Fe, 0.5% or less of Cr, 0.5% or less of Mn, or 0.5% or less of V;
(g) at least one of 0.1% or less of B or 0.1% or less of P; and
(h) at least one of 1.0% or less of Sn, 1.0% or less of Sb, or 1.0% or less of Bi.

The R value defined in Relationship 1 may be 4 to 6.

In the pretreating, the number of passes may be 3 to 5.

### Advantageous Effects of Invention

According to an embodiment of the present disclosure, a plated steel sheet and a manufacturing method therefor may be provided.

According to an embodiment of the present disclosure, a plated steel sheet having excellent corrosion resistance and durability, and a manufacturing method therefor may be provided.

According to an embodiment of the present disclosure, a plated steel sheet having excellent durability and a manufacturing method therefor may be provided by initially forming an oxide layer comprising a dense corrosion product and chromium on an exposed portion of a base steel sheet during processing.

According to an embodiment of the present disclosure, a plated steel sheet and a manufacturing method therefor that may delay a loss rate of a plating layer by forming a stable oxide layer by enriching Cr in a corrosion layer generated in an exposed portion of a base steel sheet, together with an initial corrosion delay effect of Mg-Al-based LDH, when exposed to a corrosive environment, and by forming a barrier layer.

Various advantages and effects of the present disclosure are not limited to the description, and can be more easily understood in the process of explaining the specific embodiment of the present disclosure.

### Brief Description of Drawings

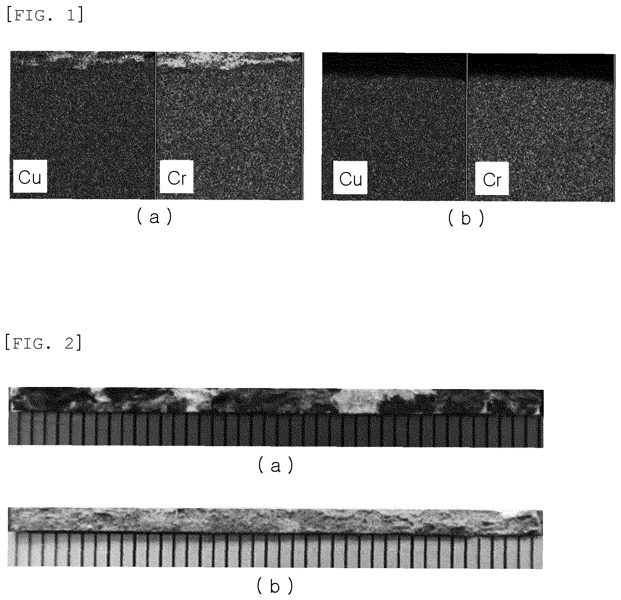

Portions (a) and (b) of FIG. 1 are photographs obtained by observing a surface of a base steel sheet before and after pretreatment of Inventive Example 2 according to an embodiment of the present disclosure, using an energy dispersive spectrometer (EDS).
Portions (a) and (b) of FIG. 2 are optical photographs of cross-sections after a complex corrosion test of Comparative Example 15 and Inventive Example 2 according to an embodiment of the present disclosure, respectively.

### Best Mode for the Invention

Hereinafter, preferred embodiments of the present disclosure will be described. Embodiments of the present disclosure may be modified in various forms, and the scope of the present disclosure should not be construed as being limited to embodiments described below. The present embodiments may be provided to explain the present disclosure in more detail to those skilled in the art to which the present disclosure pertains.

Hereinafter, the present disclosure will be described in detail.

A plated steel sheet according to an embodiment of the present disclosure may include a base steel sheet; and a plating layer formed on at least one surface of the base steel sheet.

Hereinafter, a composition of the base steel sheet of the present disclosure will be described in detail.

Unless otherwise stated in the present disclosure, % indicating the content of each element is based on weight.

The base steel sheet of the plated steel sheet according to an embodiment of the present disclosure may comprise, by weight, 0.03-0.1% of C, 1.5% or less of Si, 0.3-2.7% of Mn, 0.5-1.5% of Cr, 0.2-1.0% of Cu, 0.05-0.1% of Ni, 0.1% or less of Al, 0.1% or less of Nb, 0.1% or less of Ti, 0.03% or less of P, 0.02% or less of S, and 0.015% or less of N.

### Carbon (C): 0.03-0.1%

Carbon (C) may be an element that may be added to improve strength, and may be most effective and economical in securing strength. When the carbon (C) content is less than 0.03%, it may be difficult to sufficiently secure strength of steel, and other alloying elements need to be added to secure the strength of the steel. According to an embodiment of the present disclosure, it may be 0.04% or more. On the other hand, when the content exceeds 0.1%, weldability may deteriorate, and may adversely affect localized corrosion resistance due to promoting precipitation of carbides and the like. According to an embodiment of the present disclosure, it may be 0.09% or less.

### Silicon (Si): 1.5% or less

Silicon (Si) generally acts as a deoxidant, and may play a role in increasing strength of steel by strengthening solid solution. In addition, silicon (Si) has an effect of improving uniform corrosion resistance by forming a protective film (H₄SiO₄) on a surface layer. When the silicon (Si) content exceeds 1.5%, a size of a precipitate may be coarsened, thereby hindering securing yield strength by precipitation enhancement.

### Manganese (Mn): 0.3-2.7%

Manganese (Mn) may play a role of increasing strength through strengthening solid solution. When the content is excessive, formation of MnS may cause embrittlement of steel and reduce corrosion resistance. When the manganese (Mn) content is less than 0.3%, it may be difficult to maintain strength of the steel. According to an embodiment of the present disclosure, it may be 0.4% or more. On the other hand, when the content exceeds 2.7%, segregation portions may be developed in a thickness central portion during slab casting, and thus weldability decreases, and during a ferrite phase transformation in which C, Mn, Cr, and the like are redistributed, a concentration phenomenon of elements may intensify and corrosion resistance may decrease. According to an embodiment of the present disclosure, it may be 2.5% or less.

### Chromium (Cr): 0.5%-1.5%

Chromium (Cr) may be a basic alloying element for securing corrosion resistance of a base steel sheet. Chromium (Cr) may be concentrated on a corrosion product interface to stabilize a corrosion layer. In addition, when the base steel sheet is exposed to an environment in which corrosion occurs, such as a salt environment, chromium (Cr) may be precipitated and concentrated in iron oxide, which may serve as a barrier layer (stable rust) that reduces propagation of rust by forming a dense layer. In a plated steel sheet, when exposed to a corrosive environment, a plating layer may be lost by a sacrificial method to prevent rust of the exposed portion of a base material, but when a barrier layer in which chromium (Cr) is concentrated is provided in an exposed portion of the base material, a loss rate of the plating layer may be delayed due to a role of a sacrificial method of plating. 0.5% or more may be added to secure the above-described effect. According to an embodiment of the present disclosure, 0.6% or more may be included. As the added content increases, a corrosion resistance effect of the corrosion product interface may increase, but when the content exceeds 1.5%, the structure may be coarsened and formation of a stable oxide layer may decrease. According to an embodiment of the present disclosure, it may be 1.4% or less.

### Copper (Cu): 0.2%-1.0%

Copper (Cu) may be added to improve corrosion resistance of a base steel sheet. However, when the content exceeds 1.0%, a liquid phase may be formed on an interface of a base material at a high temperature, thereby causing high temperature brittleness. Therefore, when 1.0% or more is added, Ni needs to be added together to prevent the problems. Meanwhile, when the copper (Cu) content is less than 0.2%, there may be a problem that it is difficult to secure corrosion resistance.

### Nickel (Ni): 0.05-0.1%

Nickel (Ni) may generally be added to prevent hot shortness in Cu-added steel. When nickel (Ni) is added, it may be effective in uniform corrosion resistance and localized corrosion resistance. In order to secure the effect, 0.05% or more may be added according to an embodiment of the present disclosure. However, since nickel (Ni) may be an expensive element, an upper limit of the content is limited to 0.1% in consideration of a relative input effect. According to an embodiment of the present disclosure, it may be 0.09% or less.

### Aluminum (Al): 0.1% or less

Aluminum (Al) may be an element added for deoxidation of molten steel, and reacts with N in steel to refine austenite grains and improve toughness. In addition, there may be an effect of improving corrosion resistance. However, when the content exceeds 0.1%, Al oxide in the steel may form a coarse stretched inclusion, which may deteriorate brittleness of the steel.

### Niobium (Nb): 0.1% or less

Niobium (Nb) may precipitate NbC to impart a precipitation enhancement effect, and when NbC is precipitated, it may inhibit formation of a carbide of Cr, thereby increasing solid solution Cr. In order to secure the effect, according to an embodiment of the present disclosure, niobium (Nb) may be added in an amount of 0.05% or more. On the other hand, when the content exceeds 0.1%, there may be a concern that a coarse carbonitride may be formed.

### Titanium (Ti): 0.1% or less

Titanium (Ti) may precipitate TiC to impart a precipitation enhancement effect. Similar to the effect of Nb, when TiC is precipitated, there may be an effect of increasing solid solution Cr by inhibiting formation of a carbide of Cr. In order to secure the effect, according to an embodiment of the present disclosure, 0.02% or more may be added. On the other hand, when the content exceeds 0.1%, a coarse carbonitride may be formed, and an effect of improving strength, compared to a content increase, may be insignificant.

### Phosphorus (P): 0.03% or less

Phosphorus (P) may be an element present as an impurity in steel, and when the content is excessive, weldability and toughness may be degraded, and thus an upper limit of the content is limited up to 0.03%.

### Sulfur (S): 0.02% or less

Sulfur (S) may be an element present as an impurity in steel, and when the content is excessive, ductility, impact toughness, and weldability may decrease, so an upper limit of the content is limited up to 0.02%. In addition, when sulfur (S) is coupled to Mn in the steel to form a MnS inclusion, it serves as a corrosion initiation point, and thus its content is limited to a minimum.

### Nitrogen (N): 0.015% or less

Nitrogen (N) may be an element present at an impurity level in steel, and according to an embodiment of the present disclosure, the content thereof is limited up to 0.015%.

The steel material of the present disclosure may include remaining iron (Fe) and inevitable impurities, in addition to the composition. Since inevitable impurities may be unintentionally mixed in a conventional manufacturing process, it cannot be excluded. Since these impurities may be known to anyone skilled in the art in steel manufacturing, all of the contents may be not specifically mentioned in the specification.

Hereinafter, a microstructure of the base steel sheet of the present disclosure will be described in detail.

Unless otherwise stated in the present disclosure, a percentage indicating a fraction of microstructure may be based on an area.

The microstructure of the base steel sheet according to an embodiment of the present disclosure may include at least one of ferrite or bainite as a main phase, and may include 20% or less of a remaining structure, by area.

According to an embodiment of the present disclosure, 80% or more of ferrite and bainite may be included in order to secure a strength of 600 MPa or more. When a fraction of ferrite and bainite is less than 80%, there may be a problem in that pearlite and a MA phases may be excessively formed as a remaining structure, thereby deteriorating low-temperature toughness and corrosion resistance.

According to an embodiment of the present disclosure, the base steel sheet may include 10% or less of an portion of an oxide including at least one of Cr, Cu, Ni, Nb, or Ti within a region of 50 nm from a surface.

The oxide may be measured by observing at a magnification of 100 times through EPMA in a region of 50 nm from the surface, which may be a outermost surface region layer region.

According to an embodiment of the present disclosure, the base steel sheet may include various oxidizing elements, such as Cr for forming a stable oxide layer in the corrosion generation portion, Cu for securing additional corrosion resistance, Si for formation of ferrite or bainite, or the like, and may thus control an oxide to be concentrated on a surface, to secure high corrosion resistance and plating properties.

When an oxide including at least one of Cr, Cu, Ni, Nb, or Ti is less than 10%, desired plating properties may be secured in the present disclosure. When the oxide exceeds 10%, plating wettability may deteriorate due to the oxide concentrated in a surface layer, and plating properties may deteriorate.

The plating layer of the plated steel sheet according to an embodiment of the present disclosure may be a Zn-based plating layer including 4-7% of Mg and 8.2-20% of Al, by weight.

Mg may be an element that plays a role in improving corrosion resistance of a plated steel sheet, and the Mg content in a plating layer may be controlled to 4% or more to secure desired excellent corrosion resistance. When the Mg content is less than 4%, it may be difficult to secure sufficient corrosion resistance. In a neutral, weakly acidic, or weakly alkaline corrosive environment such as brine or rainwater of the Al-Mg-Zn-based plated steel sheet, Mg in the plating layer may be eluted, and thus, layered double hydroxide (LDH) Mg₆Al₂(OH)₁₆CO₃·4H₂O may be uniformly formed to improve corrosion resistance, and thus, a higher Mg content is preferable. However, Mg elution may be too fast in an acidic corrosive environment, such that a larger amount of Mg added may deteriorate corrosion resistance in an acidic environment. Furthermore, when Mg is excessively added, there is a possibility that MgO-type dross may be generated in the plating bath, and according to an embodiment of the present disclosure, an upper limit of the Mg content is limited to 7%. Furthermore, preferably, the upper limit of the Mg content is limited to 6%.

Al may be a component that improves corrosion resistance together with Mg, and since Al may be resistant to acid, as the Al content increases, corrosion resistance in acid may increase significantly. When the Al content is less than 8.2%, there may be a problem in securing target corrosion resistance. In addition, since Al in a plating bath has an effect of suppressing oxidation of Mg, generation of MgO-based dross may be suppressed as an amount of Al added increases. On the other hand, as the amount of Al added increases, corrosion may increase in an alkaline environment. In addition, when the amount of Al is too large, a melting point of the plating bath may increase and a temperature of the plating bath should be maintained high, and thus structure erosion in the plating bath may be intensified, and according to an embodiment of the present disclosure, the Al content is limited to 20% or less. In addition, preferably, an upper limit of the Al content is limited to 14.2%.

According to an embodiment of the present disclosure, the plating layer may further include at least one of the following groups (a) to (h).

However, since elements of each group below may be not essential elements for achieving the object of the present disclosure, a lower limit of the content is not limited. Therefore, a lower limit of the content of each element may be 0%, even when not specifically mentioned below.
(a) at least one of 0.5% or less of Si or 0.5% or less of Ni;
(b) at least one of 1.0% or less of Ca, 0.1% or less of La, 0.1% or less of Ce, 0.1% or less of Y, or 1.0% or less of Sr;
(c) 0.1% or less of Ti;
(d) 0.5% or less of W;
(e) 2.0% or less of Cu;
(f) at least one of 1.0% or less of Fe, 0.5% or less of Cr, 0.5% or less of Mn, or 0.5% or less of V;
(g) at least one of 0.1% or less of B or 0.1% or less of P; and
(h) at least one of 1.0% or less of Sn, 1.0% or less of Sb, or 1.0% or less of Bi.

### (a) at least one of 0.5% or less of Si or 0.5% or less of Ni

Si has an effect of preventing Fe-Zn alloying due to generation of interface Mg₂Si, and may prevent excessive generation of a Fe-Al alloy phase. However, when the content exceeds 0.5%, a melting point of a plating bath rises, and there may be a concern that brittleness may increase due to excessive generation of Mg₂Si. Ni has an effect of preventing Fe diffusion by generating an Al-Ni alloy phase, but when the content exceeds 0.5%, there may be a problem that a sub-material cost may excessively increase.

### (b) at least one of 1.0% or less of Ca, 0.1% or less of La, 0.1% or less of Ce, 0.1% or less of Y, or 1.0% or less of Sr

Ca, La, Ce, Y, and Sr may have an effect of preventing Mg oxidation in a plating bath by forming an oxide film, but when the contents exceed 1.0%, 0.1%, 0.1%, 0.1%, and 1.0%, respectively, Ca may have a problem of increasing dross due to an increase in oxide, and La, Ce, Y, and Sr may have a problem of lowering plating properties due to an increase in viscosity of a plating bath.

### (c) 0.1% or less of Ti

Ti has an effect of refining grains (spangles) by acting as a nucleation site by a Ti-Al intermetallic compound, but when the content exceeds 0.1%, a melting point of a plating bath may increase and there may be an increase problem of dross.

### (d) 0.5% or less of W

W may form W oxide on a surface to improve corrosion resistance, but when the content exceeds 0.5%, there may be a problem in that a melting point of a plating bath may increase.

### (e) 2.0% or less of Cu

Cu may have an effect of lowering hardness of a plating layer due to formation of an Al-Cu eutectic structure, but when the content exceeds 2.0%, there may be a problem that a spangle becomes coarse.

### (f) at least one of 1.0% or less of Fe, 0.5% or less of Cr, 0.5% or less of Mn, or 0.5% or less of V

Fe, Cr, Mn, and V may have an effect of preventing electrode degradation by suppressing alloying between zinc and a welding electrode due to fast loss of a liquid phase, but when the content exceeds 1.0%, 0.5%, 0.5%, and 0.5%, respectively, there may be a problem in that a melting point of a plating bath may excessively increase.

### (g) at least one of 0.1% or less of B or 0.1% or less of P

B and P may have an effect of suppressing LME cracks in a welding portion, but when the content exceeds 0.1%, there may be a problem in that dross generation increases.

### (h) at least one of 1.0% or less of Sn, 1.0% or less of Sb, or 1.0% or less of Bi

Sn, Sb, and Bi may have an effect of uniformizing spangles and improving pot durability by lowering a plating bath temperature, but when the content exceeds 1.0%, there may be a problem of coarsening the spangles.

According to an embodiment of the present disclosure, the plating layer may include remaining Zn, in addition to the composition, and may further include other inevitable impurities, in addition to the elements. Since the inevitable impurities may be unintentionally mixed in a conventional manufacturing process, it cannot be excluded. Since these impurities may be known to anyone skilled in the art in steel manufacturing, all of the contents may be not specifically mentioned in the present specification.

Hereinafter, a method of manufacturing a plated steel sheet of the present disclosure will be described in detail.

A plated steel sheet according to an embodiment of the present disclosure may be manufactured by preparing, annealing, pretreating, and plating a base steel sheet satisfying the alloy composition.

### Preparation of base steel sheet

A base steel sheet satisfying the alloy composition according to an embodiment of the present disclosure may be prepared.

According to an embodiment of the present disclosure, the base steel sheet may be a hot-rolled steel sheet or a cold-rolled steel sheet, and is not particularly limited.

### Annealing

The base steel sheet may be annealed in a temperature range of 800°C or less.

According to an embodiment of the present disclosure, annealing may be performed to ensure desired properties, but Si may be more active in surface enrichment in a temperature range of more than 800°C, and thus an annealing temperature is limited to 800°C or less.

### Brush pretreatment

The annealed base steel sheet may be pretreated with a brush.

Prior to plating, pretreatment may include short blast, pickling, brush treatment, or the like. Meanwhile, there may be a limit to removing an oxide such as Cr, Cu, and Si through pickling, and to remove the surface oxide, it may be effective to physically remove the oxide.

According to an embodiment of the present disclosure, pretreatment may be performed using the brush.

During brush pretreatment, a degree of removal of oxides may differ depending on a reduction amount, a speed, and number of times as well as a material, a thickness, and an abrasive type of a brush bristle. As strength of the brush bristle increases and the reduction amount, the speed, and the number of times increase, removal of the oxide is more effective, but it may be necessary to properly control it in consideration of flatness and appearance of a surface after plating. Through brush treatment, a concentrated oxide may be removed on a surface of the steel sheet before being immersed in the plating bath to secure plating properties.

According to an embodiment of the present disclosure, during brush pretreating, an R value defined in Relationship 1 below may be 4 or more. [Relationship 1] $R = \left({Bt}^{2}\right) \times \left(Bn/2\right)$
(In the Relationship, Bt is a thickness of a brush bristle (mm) and Bn is the number of brush bristles (EA))

During brush pretreatment, the thickness of the bristle and the number of the brush bristles may be highly related. According to an embodiment of the present disclosure, the desired plating property of the present disclosure may be secured by appropriately controlling a relationship between the thickness of the bristle and the number of the brush bristles through Relationship 1.

When the R value defined in the Relationship 1 is less than 4, there may be a concern that the concentrated oxide on the surface may not be sufficiently removed, and the desired plating property may not be sufficiently secured. An upper limit of the R value defined in the Relationship 1 is not particularly limited, but when the pretreatment is excessive, there may be a problem that there may be a problem that the surface is deeply damaged and stripes remain on the surface after plating, so according to an embodiment of the present disclosure, an upper limit of the R value is limited to 6. According to an embodiment of the present disclosure, even when weak (acceptable level) stripes remain on the surface, when non-plating satisfies conditions of the present disclosure, the plating property may not be significantly affected.

According to an embodiment of the present disclosure, during brush pretreatment, the bristles may have a thickness of 1-1.7 mm. In addition, according to an embodiment of the present disclosure, the number of bristles may be 1 to 7.

According to an embodiment of the present disclosure, during brush pretreating, the number of passes may be 3 to 5 times.

When the number of passes is less than 3 times, the effect of pretreatment may be insufficient, and thus plating properties may be deteriorated. On the other hand, when the number of passes exceeds 5 times, there may be a problem that stripes remain on the surface.

### Plating

The brush-pretreated base steel sheet may be plated.

According to an embodiment of the present disclosure, during plating, as the plating bath %, a Zn-based plating bath including 4-7% of Mg and 8.2-20% of Al, by weight, may be used.

A composition of the plating bath is limited for the same reason as described in the composition of the plating layer, and the same component system may be applied.

When the Mg content is less than 4%, it may be difficult to secure sufficient corrosion resistance. On the other hand, when the content exceeds 7%, there may be a problem in that dross in the form of MgO may be generated in the plating bath. In addition, to prevent a problem that dross in the form of MgO may be generated in the plating bath, an upper limit of the content of Mg may be preferably limited to 6%.

When the Al content is less than 8.2%, it may be difficult to secure sufficient corrosion resistance. On the other hand, when the content exceeds 20%, a melting point of the plating bath may increase and the plating bath temperature should be maintained high, so there may be a problem in that erosion of a structure in the plating bath may be intensified. In addition, since the melting point of the plating bath may increase and the plating bath temperature should be kept high, an upper limit of the Al content is preferably limited to 14.2% to prevent the problem of intensifying structural erosion in the plating bath.

According to an embodiment of the present disclosure, the plating bath may include other inevitable impurities. The impurities are not particularly limited, but may be at an impurity level applicable to the same technical field.

According to an embodiment of the present disclosure, during plating, the plating bath temperature may be 450 to 480°C, and a temperature difference between the base steel sheet and the plating bath may be 10 to 40°C. In order to increase interfacial reactivity between the plating solution and the base steel sheet, the plating bath temperature may be controlled in a temperature range of 450 to 480°C.

### Mode for the Invention

Hereinafter, the present disclosure will be described in more detail through embodiments. However, it may be important to note that the following embodiments may be intended to illustrate the present disclosure in more detail, and may be not intended to limit the scope of the present disclosure.

### (Example)

Plated steel sheets were manufactured under conditions of Table 2 below using steel having compositions of Table 1 below. The contents of P, S and N in the steel may be included at the impurity level, and may be included on a level satisfying a range proposed by the present disclosure. During plating, a plating bath having a composition of Mg: 5.0%, Al: 11.9%, and a remainder of Zn may be used.

**[Table 1]**

| Steel | Alloy Composition (wt%) | | | | | | | | |
|---|---|---|---|---|---|---|---|---|---|
| | C | Mn | Si | Al | Nb | Ti | Cu | Ni | Cr |
| A | 0.05 | 0.5 | 0.3 | 0.03 | 0.03 | 0.03 | 0.3 | 0.05 | 1 |
| B | 0.07 | 0.7 | 0.25 | 0.03 | 0.03 | 0.03 | 0.5 | 0.05 | 0.5 |
| C | 0.05 | 0.5 | 0.3 | 0.03 | 0.05 | 0.03 | 0.3 | 0.05 | 1.3 |
| D | 0.18 | 0.5 | 0.02 | 0.03 | - | - | - | 0.01 | - |
| E | 0.07 | 0.7 | 0.25 | 0.03 | 0.03 | 0.03 | 0.5 | 0.05 | 0.4 |
| F | 0.05 | 0.5 | 0.3 | 0.03 | 0.05 | 0.03 | 0.3 | 0.05 | 1.7 |
| G | 0.07 | 0.7 | 0.25 | 0.03 | 0.03 | 0.03 | 0.3 | 0.01 | 1.5 |
| H | 0.05 | 0.5 | 0.3 | 0.03 | 0.05 | 0.03 | 0.3 | 0.3 | 1.5 |
| I | 0.05 | 0.5 | 0.3 | 0.03 | 0.05 | 0.03 | 0.1 | 0.05 | 1.5 |
| J | 0.05 | 0.5 | 0.3 | 0.03 | 0.05 | 0.03 | 1.2 | 0.05 | 1.5 |

**[Table 2]**

| Specimen | Steel | Annealing | Brush Pretreatment | | | |
|---|---|---|---|---|---|---|
| | | Temp.(°C) | Bristle Thickness (mm) | Bristle Number (EA) | Relationship 1 | Pass Number |
| 1 | A | 750 | 1.4 | 5 | 4.9 | 4 |
| 2 | A | 750 | 1.4 | 5 | 4.9 | 3 |
| 3 | A | 750 | 1.4 | 5 | 4.9 | 2 |
| 4 | A | 750 | 1.4 | 7 | 6.86 | 3 |
| 5 | A | 750 | 1.3 | 7 | 5.92 | 2 |
| 6 | A | 750 | 1.3 | 3 | 2.54 | 3 |
| 7 | A | 750 | 1 | 3 | 1.5 | 2 |
| 8 | A | 850 | 1.4 | 3 | 2.94 | 3 |
| 9 | A | 750 | - | 5 | 0 | 3 |
| 10 | A | 750 | 1.4 | - | 0 | - |
| 11 | B | 750 | 1.4 | 5 | 4.9 | 4 |
| 12 | B | 750 | 1.4 | 5 | 4.9 | 3 |
| 13 | B | 750 | 1.3 | 5 | 4.23 | 2 |
| 14 | B | 750 | 1 | 7 | 3.5 | 2 |
| 15 | B | 750 | 1.4 | 3 | 2.94 | 2 |
| 16 | B | 750 | 1.4 | 3 | 2.94 | 3 |
| 17 | C | 750 | 1.4 | 5 | 4.9 | 4 |
| 18 | C | 750 | 1.3 | 5 | 4.23 | 3 |
| 19 | C | 750 | 1 | 5 | 2.5 | 2 |
| 20 | C | 750 | - | 3 | 0 | 2 |
| 21 | C | 750 | 1.4 | 3 | 2.94 | 3 |
| 22 | D | 750 | 1.4 | - | 0 | - |
| 23 | E | 750 | 0.8 | 5 | 1.6 | 3 |
| 24 | F | 750 | 1.2 | 5 | 3.6 | 3 |
| 25 | A | 750 | 1.2 | 5 | 3.6 | 4 |
| 26 | A | 750 | 1.4 | 1 | 0.98 | 3 |
| 27 | B | 750 | 1.4 | 5 | 4.9 | 7 |
| 28 | G | 750 | 1.4 | 5 | 4.9 | 3 |
| 29 | H | 750 | 1.4 | 5 | 4.9 | 3 |
| 30 | I | 750 | 1.4 | 5 | 4.9 | 3 |
| 31 | J | 750 | 1.4 | 5 | 4.9 | 3 |

[Relationship 1] $R = \left({Bt}^{2}\right) \times \left(Bn/2\right)$
(In the Relationship, Bt is a thickness of a brush bristle (mm) and Bn is the number of brush bristles (EA))

After plating the prepared steel sheet under conditions shown in Table 3, the plating properties and durability of the plated steel sheet were evaluated, and results were shown in Table 3 below.

Plating properties and durability were expressed after evaluation based on the following methods and criteria.

### (1) Evaluation of Plating Properties

After plating, the presence or absence of stripes and non-plated were observed, and according to observation results, it was indicated as follows. A non-plated area fraction was observed at a ratio of 100 times using EPMA detection on a surface of the plated steel sheet, and the presence of stripes was observed with the naked eye. More specific evaluation criteria were as follows. In the present disclosure, ⊚ was targeted.
⊚: No stripe and 0.1% or less of non-plated area
○: Weak (acceptable level) stripe, and 0.1% or less of non-plated area
△: More than 0.1% and 5% or less of non-plated area
×: More than 5% of non-plated area

### (2) Durability Assessment

A plated steel sheet having a size of an ASTM tensile specimen was charged in a brine spray acceleration tester by a repetitive cycle, and in this case, a tensile test was performed after removing a corrosion product after 200 cycles by setting conditions of 5% brine for 2 hours, drying for 4 hours, and wetting for 2 hours as 1 Cycle. Evaluation results were displayed according to a difference in tensile strength before and after a corrosion test. In the present disclosure, a condition in which the difference in tensile strength before and after the corrosion test was 10% or less was judged as good.
○: 10% or less
△: More than 10% and 20% or less
×: More than 20%

**[Table 3]**

| Specimen | Steel | Properties | | Example |
|---|---|---|---|---|
| | | Plating Property | Durability | |
| 1 | A | ⊚ | ○ | Inventive Ex. 1 |
| 2 | A | ⊚ | ○ | Inventive Ex. 2 |
| 3 | A | Δ | Δ | Comparative Ex. 1 |
| 4 | A | ○ | ○ | Inventive Ex. 3 |
| 5 | A | Δ | Δ | Comparative Ex. 2 |
| 6 | A | × | × | Comparative Ex. 3 |
| 7 | A | × | × | Comparative Ex. 4 |
| 8 | A | × | × | Comparative Ex. 5 |
| 9 | A | Δ | Δ | Comparative Ex. 6 |
| 10 | A | × | × | Comparative Ex. 7 |
| 11 | B | ⊚ | ○ | Inventive Ex. 4 |
| 12 | B | ⊚ | ○ | Inventive Ex. 5 |
| 13 | B | Δ | Δ | Comparative Ex. 8 |
| 14 | B | ○ | Δ | Comparative Ex. 9 |
| 15 | B | × | × | Comparative Ex. 10 |
| 16 | B | × | × | Comparative Ex. 11 |
| 17 | C | ⊚ | ○ | Inventive Ex. 6 |
| 18 | C | ⊚ | ○ | Inventive Ex. 7 |
| 19 | C | Δ | Δ | Comparative Ex. 12 |
| 20 | C | × | × | Comparative Ex. 13 |
| 21 | C | × | × | Comparative Ex. 14 |
| 22 | D | ⊚ | × | Comparative Ex. 15 |
| 23 | E | ○ | × | Comparative Ex. 16 |
| 24 | F | Δ | Δ | Comparative Ex. 17 |
| 25 | A | × | × | Comparative Ex. 18 |
| 26 | A | × | × | Comparative Ex. 19 |
| 27 | B | ○ | ○ | Inventive Ex. 8 |
| 28 | G | ○ | Δ | Comparative Ex. 21 |
| 29 | H | Δ | Δ | Comparative Ex. 22 |
| 30 | I | ○ | × | Comparative Ex. 23 |
| 31 | J | Δ | Δ | Comparative Ex. 24 |

As shown in Table 3, in Inventive Examples satisfying the conditions of the present disclosure, desired properties of the present disclosure may be ensured.

Portions (a) and (b) of FIG. 1 are photographs obtained by observing a surface of a base steel sheet before and after pretreatment of Inventive Example 2 according to an embodiment of the present disclosure, using an energy dispersive spectrometer (EDS). As shown in portion (b) of FIG. 1, it can be confirmed that the surface oxide was removed after the pretreatment.

Portions (a) and (b) of FIG. 2 are optical photographs of cross-sections after a complex corrosion test of Comparative Example 15 and Inventive Example 2 according to an embodiment of the present disclosure, respectively. In portion (a) of FIG. 2, since a stable oxide layer was not formed on an exposed portion of a base steel sheet, a sacrificial reaction of non-uniform oxidation and continuous sacrificial reaction of the plating layer was observed. In portion (b) of FIG. 2, it can be seen that a passivation layer, which may be a stable oxide layer, was formed on the exposed portion of the base steel sheet.

On the other hand, in Comparative Examples not satisfying the alloy composition and pretreatment conditions of the base steel sheet proposed by the present disclosure, it was confirmed that desired plating property and durability were not secured at the same time.

Although the present disclosure has been described in detail through embodiments, other forms of embodiments may be also possible. Therefore, the technical idea and scope of the claims described below may be not limited to embodiments.

## Claims

1. A plated steel sheet comprising:
a base steel sheet comprising, by weight, 0.03-0.1% of C, 1.5% or less of Si, 0.3-2.7% of Mn, 0.5-1.5% of Cr, 0.2-1.0% of Cu, 0.05-0.1% of Ni, 0.1% or less of Al, 0.1% or less of Nb, 0.1% or less of Ti, 0.03% or less of P, 0.02% or less of S, and 0.015% or less of N, with a remainder of Fe and inevitable impurities; and
a plating layer formed on at least one surface of the base steel sheet,
wherein an area of non-plated regions is 0.1% or less, by area, and
wherein a difference in tensile strength before and after a corrosion test is 10% or less.

2. The plated steel sheet of claim 1, wherein an oxide comprising at least one of Cr, Cu, Ni, Nb, or Ti is 10% or less of the base steel sheet, by area, within a region of 50 nm from a surface of the base steel sheet.

3. The plated steel sheet of claim 1, wherein the plating layer is a Zn-based plating layer comprising 4-7% of Mg and 8.2-20% of Al, by weight.

4. The plated steel sheet of claim 3, wherein the plating layer further comprises one or more selected from the group comprising of (a) to (h):
(a) at least one of 0.5% or less of Si or 0.5% or less of Ni;
(b) at least one of 1.0% or less of Ca, 0.1% or less of La, 0.1% or less of Ce, 0.1% or less of Y, or 1.0% or less of Sr;
(c) 0.1% or less of Ti;
(d) 0.5% or less of W;
(e) 2.0% or less of Cu;
(f) at least one of 1.0% or less of Fe, 0.5% or less of Cr, 0.5% or less of Mn, or 0.5% or less of V;
(g) at least one of 0.1% or less of B or 0.1% or less of P; and
(h) at least one of 1.0% or less of Sn, 1.0% or less of Sb, or 1.0% or less of Bi.

5. The plated steel sheet of claim 1, wherein the plating layer comprises at least one of a Zn-Al-MgZn₂ ternary eutectic structure, a Zn-MgZn₂ binary eutectic structure, an Al single-phase structure in which Zn is solid-dissolved, or a Zn single-phase structure.

6. A method for manufacturing a plated steel sheet, comprising:
preparing a base steel sheet comprising, by weight, 0.03-0.1% of C, 1.5% or less of Si, 0.3-2.7% of Mn, 0.5-1.5% of Cr, 0.2-1.0% of Cu, 0.05-0.1% of Ni, 0.1% or less of Al, 0.1% or less of Nb, 0.1% or less of Ti, 0.03% or less of P, 0.02% or less of S, and 0.015% or less of N, with a remainder of Fe and inevitable impurities;
annealing the base steel sheet;
pretreating the annealed base steel sheet; and
plating the pretreated base steel sheet,
wherein, in the pretreating, an R value defined in Relationship 1 is 4 or more, and the number of passes is 3 or more: [Relationship 1] $R = \left({Bt}^{2}\right) \times \left(Bn/2\right)$ where Bt is a thickness of a brush bristle (mm) and Bn is the number of brush bristles (EA).

7. The method of claim 6, wherein, in the plating, a plating bath is a Zn-based plating bath comprising 4-7% of Mg and 8.2-20% of Al, by weight.

8. The method of claim 7, wherein the plating bath further comprises one or more selected from the group comprising (a) to (h):
(a) at least one of 0.5% or less of Si or 0.5% or less of Ni;
(b) at least one of 1.0% or less of Ca, 0.1% or less of La, 0.1% or less of Ce, 0.1% or less of Y, or 1.0% or less of Sr;
(c) 0.1% or less of Ti;
(d) 0.5% or less of W;
(e) 2.0% or less of Cu;
(f) at least one of 1.0% or less of Fe, 0.5% or less of Cr, 0.5% or less of Mn, or 0.5% or less of V;
(g) at least one of 0.1% or less of B or 0.1% or less of P; and
(h) at least one of 1.0% or less of Sn, 1.0% or less of Sb, or 1.0% or less of Bi.

9. The method of claim 6, wherein the R value defined in Relationship 1 is 4 to 6.

10. The method of claim 6, wherein, in the pretreating, the number of passes is 3 to 5.
